# EUROPEAN PATENT APPLICATION

(11) **EP 2 196 921 A1**
(43) Date of publication of application: **16.06.2010**
(21) Application number: 09252696.1
(22) Date of filing: 27.11.2009
(51) Int. Cl.: G06F 17/30

(54) **Search engine method and apparatus**

(30) Priority: 12.12.2008 US 333882
(71) Applicant: Recipero Limited, Gloucestershire GL10 3HG (US)
(72) Inventor: Portlock, Adrian, Cheltenham, GL53 0JY (GB); Gray, Les, Stroud, GL6 8FF (GB)
(74) Representative: Brewer, Michael Robert

(57) **Abstract**

A method is provided for use with a search engine, the search engine being adapted to determine a set of search results relevant to one or more search terms input to it. The method comprises: receiving (S1) a search term that has been entered by a user into an interface to the search engine, the received search term acting as a coded identifier of an item; transforming (S2) the received search term into a set of related search terms that are considered to be relevant to the item identified by the received search term; and forwarding (S3) the set of related search terms to the search engine to perform the search.

## Description

### Technical field

The present invention relates to an apparatus and method for use with a search engine, for example an internet search engine.

### Summary

According to a first aspect of the present invention there is provided a method for use with a search engine, the search engine being adapted to determine a set of search results relevant to one or more search terms input to it, and the method comprising:
receiving a search term that has been entered by a user into an interface to the search engine, the received search term acting as a coded identifier of an item; transforming the received search term into a set of related search terms that are considered to be relevant to the item identified by the received search term; and forwarding the set of related search terms to the search engine to perform the search.

The set of related terms forwarded to the search engine may comprise the received search term.

The method may comprise determining one or more classes to which the search term relates, and using the determined class or classes to determine the set of related search terms.

The received search term may comprise a set of characters that uniquely identifies the item, or at least which uniquely identifies the item within a predetermined geographical or other domain.

The received search term may comprise a representation of a serial code that is physically applied to or at least associated with the item.

The item may comprise a physical object.

The item may comprise a consumer product.

The item may comprise a mobile telephone, and the search term may comprise the International Mobile Equipment Identifer of the mobile telephone.

The item may comprise a service provision, being a service that has been or is being provided to the user.

The item may comprise a user record, such as a user tax or health record.

The related search terms may be determined in dependence upon associated respective measures of desirability for those search terms.

The measure of desirability for a search term may relate to a likelihood that an entity would wish to influence the results of the search engine when that search term is entered by a user.

The entity may be an organisation wishing to include or promote search results that relate to a product or service of theirs.

The received search term may act as a coded identifier of an individual item.

The search engine may be an internet search engine.

According to a second aspect of the present invention there is provided an apparatus for use with a search engine, the search engine being adapted to determine a set of search results relevant to one or more search terms input to it, and the apparatus comprising: means for receiving a search term that has been entered by a user into an interface to the search engine, the received search term acting as a coded identifier of an item; means for transforming the received search term into a set of related search terms that are considered to be relevant to the item identified by the received search term; and means for forwarding the set of related search terms to the search engine to perform the search.

According to a third aspect of the present invention there is provided a program for controlling an apparatus to perform a method according to the first aspect of the present invention or which, when loaded into an apparatus, causes the apparatus to become an apparatus according to the second aspect of the present invention. The program may be carried on a carrier medium. The carrier medium may be a storage medium. The carrier medium may be a transmission medium.

According to a fourth aspect of the present invention there is provided an apparatus programmed by a program according to the third aspect of the present invention.

According to a fifth aspect of the present invention there is provided a storage medium containing a program according to the third aspect of the present invention.

### Brief description of the drawings

Figure 1 is a schematic representation of a method embodying the present invention;
Figure 2 is a another schematic representation of a method embodying the present invention;
Figure 3 is a schematic representation of an apparatus embodying of the present invention
Figure 4 is a schematic representation of a first example system making use of an embodiment of the present invention;
Figure 5 is a schematic representation of a second example system making use of an embodiment of the present invention; and
Figure 6 is a schematic representation of a third example system making use of an embodiment of the present invention.

### Detailed description

The present applicant has appreciated that internet search engines are not currently able to return any search results for a search term of a type that uniquely identifies a particular product, such as a serial number. As a result, the present applicant has appreciated that third parties, such as but not limited to advertisers, are not currently able to influence the results of the search, for example by including or promoting search results or advertising that relate to the product identified by the serial number entered by the user into the search engine. In general, current search engine technology relies on text based information not alpha numeric data.

One application example for an embodiment of the present involves would be the automatic augmenting of a numeric or alphanumeric serial number for a product with the product type, make and model information, so that the search engine would then be able to return search results (e.g. in the form of targeted advertisements) as if the user had themselves entered this into the search engine. This would be of great interest, for example, to companies who maintain databases of serial numbers all of which are associated with a product type, make and model, and provide them with a means to use this information to provide a valuable service to the end user, whereby a rich set of search results would be produced merely on the basis of a serial number (or similar) readily available on the product or item of interest. This is not currently supported by any search engine.

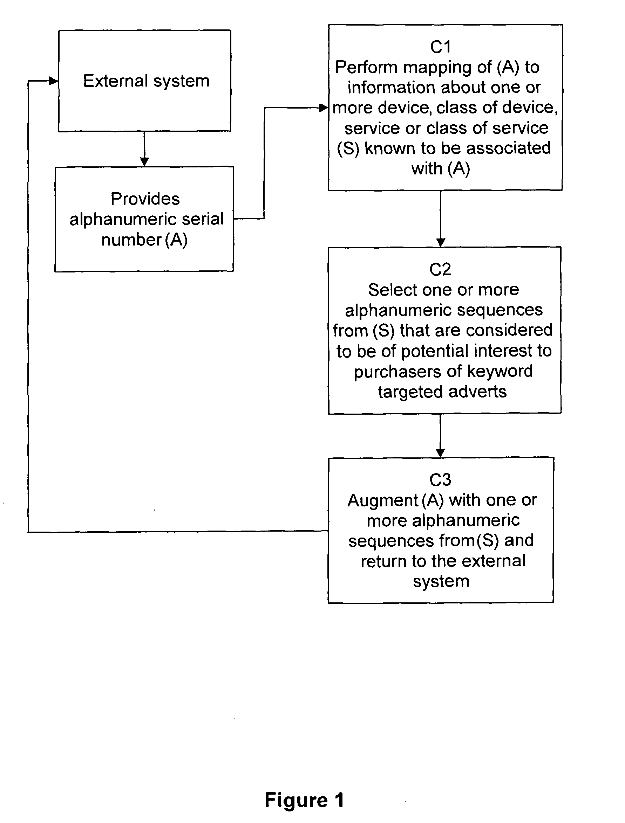

Figure 1 is a schematic representation of a method embodying the present invention. A user provides an alphanumeric search term A identifying an item of interest. In step C1 the search term A is associated with additional information S known in relation to the item identified by A; this might be performed for example with reference to a database either locally or remotely that holds a list of serial numbers (or the like) along with related information.

In step C2, one or more terms TS are selected from the additional information S, for example those terms that are considered to be more likely than the term A on its own to be targeted by advertisers.

In step C3 the original search term A is concatenated with the selected terms TS to provide the finished augmented search term for consideration by an external search process.

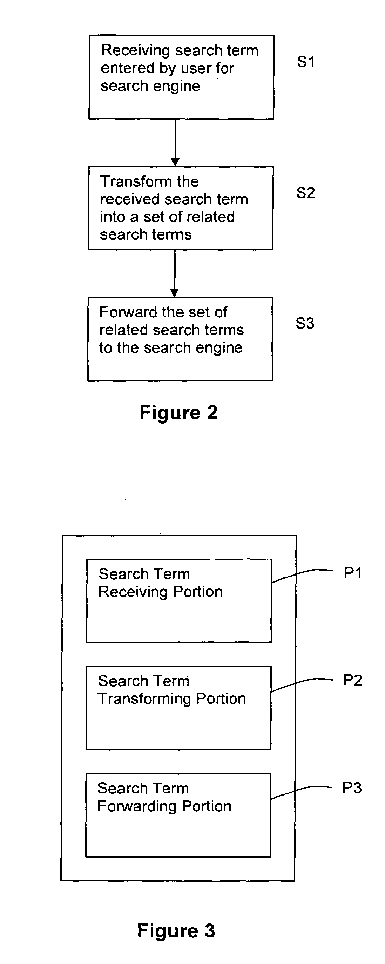

Figure 2 is an alternative representation of a method embodying the present invention. In step S1 a search term is received that has been entered by a user into an interface to the search engine. The received search term acts as a coded identifier of an item. In step S2 the received search term is mapped or transformed into a set of related search terms (alternatively it can be said that the related search terms are derived or determined from the received search term) that are considered to be relevant to the item identified by the received search term. The set of related search terms may comprise a single related search term or a plurality of related search terms. In step S3 the set of related search terms is forwarded to the search engine to perform the search.
Figure 3 is a schematic block diagram representation of apparatus embodying the present invention for performing the method as set out in Figure 2. Parts P1 to P3 of Figure 2 are for performing steps S1 to S3 respectively.

A method and system is thereby provided to augment a search term, typically a human-readable identification number associated with a physical item or a service provision, with additional terms that are themselves likely to have been targeted by advertisers who consider these additional terms "keywords". The keywords thus obtained are directly relevant to the item or service associated with the identifier. The augmented search term may then be utilised by an internet search engine (or other computerised search process) to provide results and targeted adverts.

The following are examples of search terms that are augmented according to a process embodying the present invention:

As a first example, the user might identify the IMEI (International Mobile Equipment Identifer) of their mobile phone, and wish to find out more information through the search engine. An example of such a number would be 35755901267253501 (this term is globally unique to the individual mobile phone handset), which the user would enter into an interface provided for the search engine. In this regard, the interface could be the standard search engine interface, with an additional layer provided to detect the entry of a search term into the interface, which would in turn trigger a process embodying the present invention to augment the search term before it is actually submitted to the external search engine. The additional layer referenced may comprise of client, server or transport medium based software that could be triggered by the entry of a term into an input field on the client, the transmission of the contents of said field across a transmission medium or the receipt of the contents of said field at a receiving server. Once triggered, augmentation might be achieved by the return of augmented terms to the client, modification of the original terms in transit over the transport medium or the subsequent forwarding or proxying of the submitted data to the original intended destination. Using a process embodying the present invention (and making use of one or more proprietary data sets) it is possible to augment the term entered by the user with the following (example) information about this handset.

The make "HTC"; the model "Diamond Touch"; whether or not it has ever been stolen, blocked, reported lost, found, re-sold, registered, claimed for with an insurer, in addition to any other information directly relevant to it. Confining just to the make and model and device type for the purposes of example, the original term would be augmented with the terms "HTC", "Mobile Phone" and "Diamond Touch".

A search for the original term ("35755901267253501" in the above example) on any popular search engine is unlikely to yield any search results (e.g. advertisements) targeted to the term, because it is too specific e.g. for the advertisers even to consider. However, searching for the complete term following augmentation by a method according to an embodiment of the present invention, "35755901267253501 HTC Diamond Touch Mobile Phone" would yield many targeted ads all of them relevant to one or more of the terms entered and all of them potentially relevant to the individual carrying out the search. It is not essential that the original term "35755901267253501" be included in the final search terms, since it may be of limited relevance, but its presence at least is reassuring for the user, who might be surprised to see their original term completely replaced.

Another example would be the replacement of an original search term "GMR300704EN0" with an augmented search term "GMR300704EN0 Toshiba A210 Series Laptop".

Another example would be the replacement of an original search term "A61F6VKLB15127" with an augmented search term "A61F6VKLB15127 Samsung SC-D363 Video Camera".

Another example would be the replacement of an original search term "Y45038J12805" with an augmented search term "Y45038J12805 TomTom ONE Satellite Navigation System".

Another example would be the replacement of an original search term "GE671977" with an augmented search term "GE671977 Giant GXT Bicycle".

Another example would be the replacement of an original search term "8K82547EYMV" with an augmented search term "8K82547EYMV Apple 80GB Classic iPod".

Another example would be the replacement of an original search term "L694 EAB" with an augmented search term "L694 EAB Audi Coupe 16v Car".

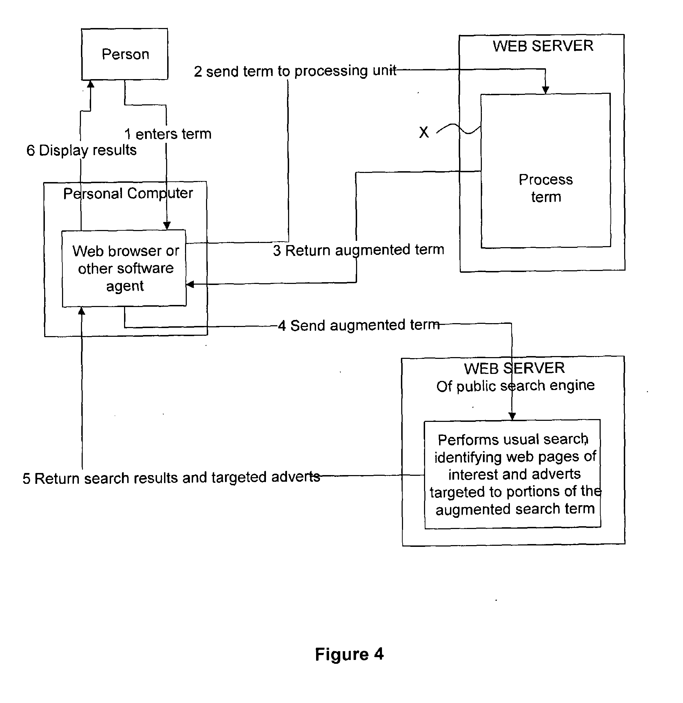

Figure 4 is a schematic block diagram illustrating an example of how an embodiment of the present invention might be utilised in a self-contained manner, operating on its own hardware and independently from the search engine. The interaction between the various parts is clearly shown in the diagram, set out as a series of interaction steps from 1 to 6. In this example, the user's PC submits a term for augmentation then submits the augmented term to a search engine. Steps C1 to C3 described above would be performed by the block marked X in the diagram.

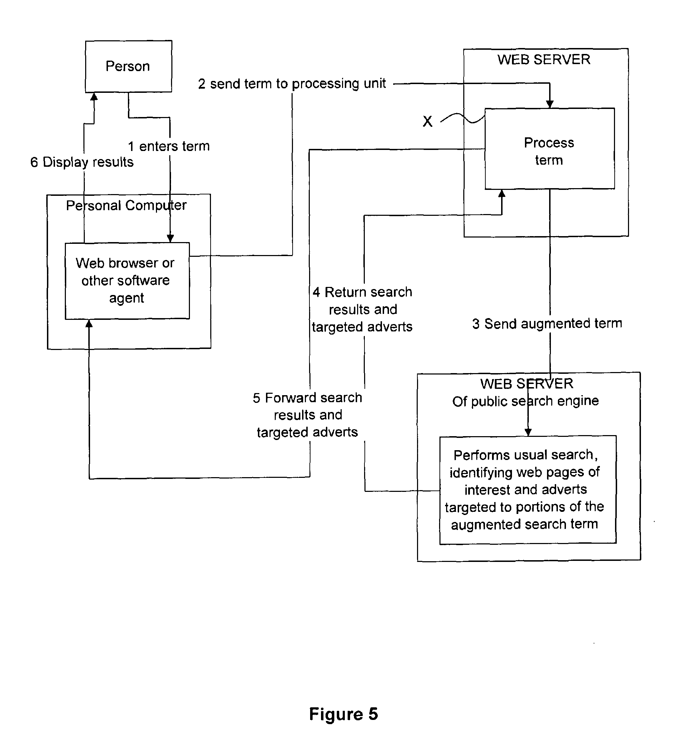

Figure 5 is a schematic block diagram illustrating another example of how an embodiment of the present invention might be utilised, this time by acting as a proxy for the desired final search engine. Here, the user's PC sends the term for augmentation, an embodiment of the present invention would perform the augmentation, submits it to a desired search engine, retrieves results from that search engine and forwards the results back to the user's PC.

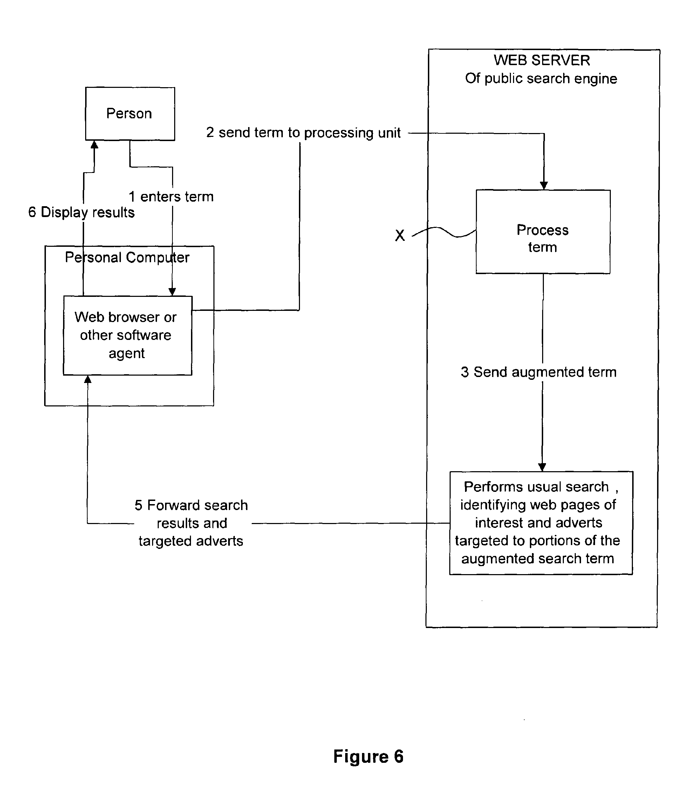

Figure 6 is a schematic block diagram illustrating another example of how an embodiment of the present invention might be utilised, showing how any given search engine could, under license, utilise an embodiment of the invention within its own apparatus, performing the augmentation silently and returning only the final desired result to the user's PC.

The above description illustrates how a method according to an embodiment of the present invention provides improved search engine results and a keyword based advert targeting by relevant augmentation of the search term.

Although the above examples above show mostly physical items or classes of items being identified by serial number in order to drive the augmentation, an embodiment of the present invention is by no means limited to physical goods. It could equally be used to identify airway bills or transaction numbers of well established services. For example, entering one's unique tax reference number would not result in private details being divulged but would be possible to map the number to augment it with the terms "Income Tax" and this would throw up adverts for income tax software etc. on most search engines.

Although the above description relates in the main to the augmenting of unique product identifier (e.g. serial number) search terms, an embodiment of the present invention will also find use in providing a means of augmenting or expanding or transforming other types of search terms, as an intermediate step between the search term being entered by the user and the search term being acted upon by the search engine. For example, the search term may be one that characterises the physical item or that identifies a type of product, rather than one that identifies the actual physical item itself, and an embodiment of the present invention would enable additional relevant search terms to be added to the basic search term entered by the user in order to provide a richer, more useful and more targeted set of search results than would otherwise have been the case. In one embodiment the additional search terms could be selected based on personal information relating the user, which information would not be available to the target search engine. For example, it may be known that the original purchaser of a mobile phone purchased a contract rather than pay as you go deal, such that an embodiment of the present invention could use "pay as you go" or "contract" as augmentation to influence the selection of advertisements and search results. Similarly, one could use knowledge of the original registrant's or original seller's location to localise the search results.

It will be appreciated that the search term entered by the user need not be an alphanumeric search term, but could be any representation of the product identifier. For example, each item in a warehouse or retail institution may be barcoded to identify or characterise the items, and barcode scanning apparatus would be used to scan a barcode, with the scanned data being used as an input "search term" for a method embodying the present invention.

Although the above description relates in the main to internet search engines, it will be appreciated that an embodiment of the present invention is applicable to any search system in which a search term is entered by the user with the intention of providing a set of search results based on that search term. It will also be appreciated that, although an embodiment of the present invention has use in presenting targeted advertisements to users, the usefulness goes far beyond that, in enhancing a search facility in any number of practical and technical scenarios.

It will be appreciated that operation of one or more of the above-described blocks or components can be controlled by a program operating on the device or apparatus. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

## Claims

1. A method for use with a search engine, the search engine being adapted to determine a set of search results relevant to one or more search terms input to it, and the method comprising: receiving a search term that has been entered by a user into an interface to the search engine, the received search term acting as a coded identifier of an item; transforming the received search term into a set of related search terms that are considered to be relevant to the item identified by the received search term; and forwarding the set of related search terms to the search engine to perform the search.

2. A method as claimed in claim 1, comprising determining one or more classes to which the search term relates, and using the determined class or classes to determine the set of related search terms.

3. A method as claimed in claim 1 or 2, wherein the received search term comprises a set of characters that uniquely identifies the item, or at least which uniquely identifies the item within a predetermined geographical or other domain, and/or wherein the received search term comprises a representation of a serial code that is physically applied to or at least associated with the item.

4. A method as claimed in claim 1, 2 or 3, wherein the item comprises a physical object.

5. A method as claimed in claim 4, wherein the item comprises a consumer product.

6. A method as claimed in claim 5, wherein the item comprises a mobile telephone, and the search term comprises the International Mobile Equipment Identifer of the mobile telephone.

7. A method as claimed in claim 1, 2 or 3, wherein the item comprises a service provision, being a service that has been or is being provided to the user.

8. A method as claimed in claim 1, 2 or 3, wherein the item comprises a user record, such as a user tax or health record.

9. A method as claimed in any preceding claim, wherein the related search terms are determined in dependence upon associated respective measures of desirability for those search terms.

10. A method as claimed in claim 9, wherein the measure of desirability for a search term relates to a likelihood that an entity would wish to influence the results of the search engine when that search term is entered by a user.

11. A method as claimed in claim 10, wherein the entity is an organisation wishing to include or promote search results that relate to a product or service of theirs.

12. A method as claimed in any preceding claim, wherein the set of related terms forwarded to the search engine comprises the received search term, and/or wherein the received search term acts as a coded identifier of an individual item, and/or wherein the search engine is an internet search engine.

13. An apparatus for use with a search engine, the search engine being adapted to determine a set of search results relevant to one or more search terms input to it, and the apparatus comprising: means for receiving a search term that has been entered by a user into an interface to the search engine, the received search term acting as a coded identifier of an item; means for transforming the received search term into a set of related search terms that are considered to be relevant to the item identified by the received search term; and means for forwarding the set of related search terms to the search engine to perform the search.

14. A program for controlling an apparatus to perform a method as claimed in any one of claims 1 to 12, for example where the program is carried on a carrier medium such as a storage medium or a transmission medium.

15. A storage medium containing a program as claimed in claim 14.
